# EUROPEAN PATENT SPECIFICATION

(11) **EP 3 832 129 B1**
(45) Date of publication and mention of the grant of the patent: **21.06.2023**
(21) Application number: 20209689.7
(22) Date of filing: 25.11.2020
(51) Int. Cl.: F03D 7/02

(54) **WIND POWER GENERATOR**
WINDKRAFTGENERATOR
GÉNÉRATEUR D'ÉNERGIE ÉOLIENNE

(30) Priority: 05.12.2019 JP 2019220543
(43) Date of publication of application: 09.06.2021
(73) Proprietor: Hitachi, Ltd., Tokyo 100-8280 (JP)
(72) Inventor: YAMAMOTO, Yukio, Chiyoda-ku, Tokyo 100-8280 (JP)
(74) Representative: Strehl Schübel-Hopf & Partner

(56) References cited:
- US-A1- 2012 027 566
- US-A1- 2017 074 245
- US-B1- 8 890 349

## Description

### Technical Field

The present invention relates to a wind power generator, and more particularly to a wind power generator having a function of switching operation modes according to wind conditions to reduce the load acting on the wind power generator.

### Background Art

From the viewpoint of environmental protection, power generators that use renewable energy obtained from nature, such as wind and sunlight, have been attracting attention due to no use of fossil fuels and reduced emissions of carbon dioxide. Particularly, wind power generators have been receiving attention because they are capable of relatively stable power generation day and night when installed at a selected location where wind conditions such as wind speed and wind direction are stable, and can be installed offshore, where the wind speed is higher and change in the wind conditions is smaller than onshore.

Wind power generators are operated while monitoring wind conditions such as wind speed, wind direction, and yaw error, which is the difference between the wind direction and the direction of a nacelle, and the operation of the wind power generator is stopped when wind conditions such that a large load is applied to the wind power generator (wind turbine) occur. However, it is not desirable to stop the operation frequently because it causes decrease in the amount of power generation. For this reason, it is desirable to continue operation unless the load acting on the wind power generator (which may hereinafter be simply referred to as "load") is particularly large, such as when the wind speed rises above a rating or the yaw error becomes extremely large. Thus, a method of reducing the load by transitioning from a normal operation mode to a low-load operation mode in wind conditions where the load is large has been proposed.

In general, a transition to the low-load operation mode occurs when a value such as the wind speed or yaw error of wind condition data exceeds a threshold. In the low-load operation mode, the load is reduced by limiting the rotation speed and the generated power, during which the amount of power generation is lower than in the normal operation mode. In order to prevent decrease in the amount of power generation, it is necessary to set the threshold of transitioning to the low-load operation mode as high as possible. However, the transition from the normal operation mode to the low-load operation mode requires a certain period of time to avoid a sudden change in the rotation speed and the generated power. If the transition threshold is set high, the transition to the low-load operation mode may be delayed and the load may increase. Therefore, it is necessary to lower the transition threshold in order to reliably avoid the load increase. The setting of the transition threshold is an issue for achieving both a sufficient amount of power generation and load reduction.

Such a threshold of transitioning to a low-load operation mode is disclosed in Patent Literature 1, for example. Patent Literature 1 discloses selecting a load-suppression operation mode when the wind speed or an index of wind speed turbulence intensity is equal to or greater than a threshold and varying the threshold of the wind speed or the index of wind speed turbulence intensity according to the wind direction, and selecting the load-suppression operation mode when the index of wind speed turbulence intensity is equal to or greater than a threshold and varying the threshold of the index of wind speed turbulence intensity according to the wind direction and the wind speed.

### Citation List

### Patent Literature

Patent Literature 1: JP 2017-133441 A

A load reduction system for a wind power unit with the features in the pre-characterizing portion of Claim 1 is disclosed in US 8 890 349 B1.

### Summary of Invention

### Technical Problem

The wind power generator disclosed in Patent Document 1 optimizes the transition threshold of the wind speed or the index of wind speed turbulence intensity by considering the wind direction or the wind direction and the wind speed. However, according to a study by the present inventor, there is room for further improvement for achieving both a sufficient amount of power generation and load reduction.

In Patent Document 1, for example, the transition threshold of the wind speed or the index of wind speed turbulence intensity is constant unless the wind direction does not change. However, wind conditions often last for some period of time, and it can be considered that once a transition from the normal operation mode to the low-load operation mode occurs, continuous transitions from the normal operation mode to the low-load operation mode occur subsequently. Conventionally, no consideration has been given to such a period of time in which the low-load operation mode is likely to occur.

According to a study of the present inventor, by setting the transition threshold in consideration of a period of time in which the low-load operation mode is likely to occur, further improvement can be made for achieving both a sufficient amount of power generation and load reduction.

An object of the present invention is to provide a wind power generator that can make an improvement for achieving both a sufficient amount of power generation and reduction of the load acting on the wind power generator.

### Solution to Problem

In order to solve the above problems, the present invention suggest the wind power generator defined in Claim 1. Further advantageous features are set out in the dependent claims.

Although single dependencies are used in the claims in order to simplify citation relationships, the present invention also encompasses multiple dependencies and even multiple dependencies from multiple dependent claims.

### Advantageous Effects of Invention

According to the present invention, it is possible to make an improvement for achieving both a sufficient amount of power generation and reduction of the load acting on the wind power generator. That is, according to the present invention, a transition from the normal operation mode to the low-load operation mode can be made early in wind conditions where the possibility of the operation in the low-load operation mode is high, and the load acting on the wind power generator can be reduced. In addition, it is possible to prevent decrease in the amount of power generation since the threshold of transitioning from the normal operation mode to the low-load operation mode returns to a normal transition threshold in wind conditions where the possibility of the operation in the low-load operation mode is not high.

Problems, configurations, and effects other than those described above will be apparent in the following description of the embodiments.

### Brief Description of Drawings

Fig. 1 is a diagram showing a configuration outline of a wind power generator according to an embodiment of the present invention.
Fig. 2 is a schematic diagram showing an example of relationships of generated power, generator rotation speed, generator torque, and pitch angle in the wind power generator.
Fig. 3 is a schematic diagram showing an example of the relationship between the interval and frequency of occurrence of transitions at a place where transitions to a low-load operation mode frequently occur.
Fig. 4 is a block diagram showing an outline of an operation control unit of the wind power generator according to a first embodiment.
Fig. 5 is a schematic diagram showing an example of an operation mode switching operation in the first embodiment.
Fig. 6 is a schematic diagram showing an example of an operation mode switching operation in a second embodiment.
Fig. 7 is a schematic diagram showing an example of an operation mode switching operation in a third embodiment.

### Description of Embodiments

Embodiments of the present invention will be described below with reference to the drawings. In the figures, the same components are designated by the same reference numerals, and overlapping portions will not be described in detail.

### First Embodiment

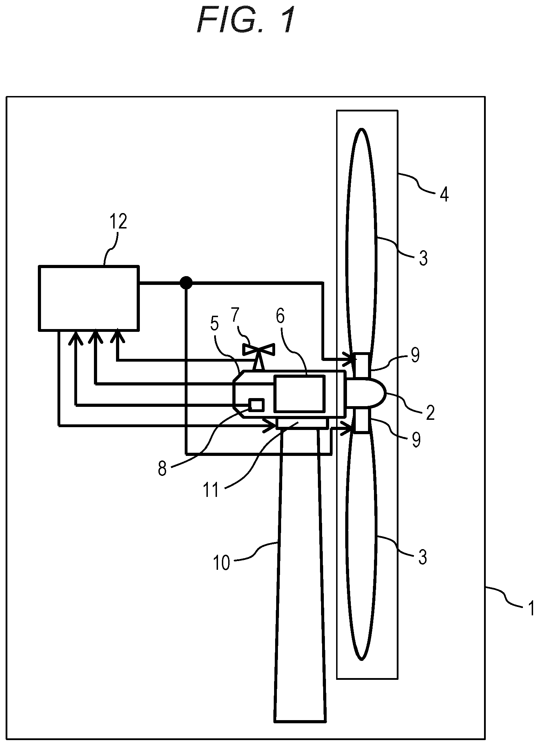

A wind power generator according to a first embodiment will be described with reference to Figs. 1 to 5. Fig. 1 is a diagram of an overall schematic configuration of the wind power generator according to the first embodiment of the present invention.

A wind power generator 1 shown in Fig. 1 is of a downwind type, in which a rotor is on the downwind side, and includes a rotatable rotor 4 composed of a hub 2 having a rotation shaft (not shown in the figure) and a plurality of blades 3 attached to the hub 2. The rotor 4 is rotatably supported by a nacelle 5 via a rotation shaft (not shown), and the rotational force of the rotor 4 is transmitted to a generator 6 in the nacelle 5. In the wind power generator 1, the rotor 4 rotates when the blades 3 receive wind, and the generator 6 is rotated by the rotational force of the rotor 4 to generate electric power.

A wind direction and speed meter 7 for measuring the wind direction and wind speed is provided on the nacelle 5, and a rotation speed sensor 8 for detecting the rotation speed and a power sensor (not shown the figure) for measuring an effective electric power output by the generator are provided in the generator 6.

Further, the wind power generator 1 includes a pitch angle adjustment device 9 for adjusting the angle (pitch angle) of the blades 3 with respect to the wind for each of the blades 3. The pitch angle adjustment device 9 is configured to adjust the wind force (air volume) received by the blades 3 by changing the pitch angle of the blades 3 to change the rotational energy of the rotor 4 created by the wind. This makes it possible to control the rotation speed and the generated power over a wide wind speed range.

The wind power generator 1 includes a tower 10 that rotatably supports the nacelle 5. The direction of the nacelle 5 is referred to as a yaw angle, and the wind power generator 1 includes a yaw angle adjustment device 11 that controls the direction of the nacelle 5, that is, the direction of the rotating surface of the rotor 4. As shown in Fig. 1, the yaw angle adjustment device 11 is disposed between the bottom surface of the nacelle 5 and the distal end portion of the tower 10, and is composed of, for example, at least an actuator and a motor for driving the actuator (not shown). Based on a yaw angle target value output from an operation control device 12 via a signal line, the motor constituting the yaw angle adjustment device 11 rotates and the actuator is displaced by a desired amount so that the nacelle 5 rotates to a desired yaw angle.

The tower 10 is configured to support the load of the blades 3 via the hub 2, the nacelle 5, and the yaw angle adjustment device 11, and is installed on the ground.

The operation control device 12 constituting the wind power generator 1 adjusts the torque of the generator 6 and the pitch angle adjustment device 9 based on the rotation speed (rotor rotation speed), the generated power output from the generator 6, and the like to control the generated power of the wind power generator 1 and the rotation speed of the rotor 4. The operation control device 12 adjusts the yaw angle adjustment device 11 to control a yaw error, which is the angle of the rotor 4 with respect to the wind direction, so that power generation can be continued even when the wind direction changes.

Although the operation control device 12 is shown as being installed outside the nacelle 5 and the tower 10 in Fig. 1, the operation control device 12 may be arranged inside the nacelle 5 or the tower 10, or may be installed outside the wind power generator 1.

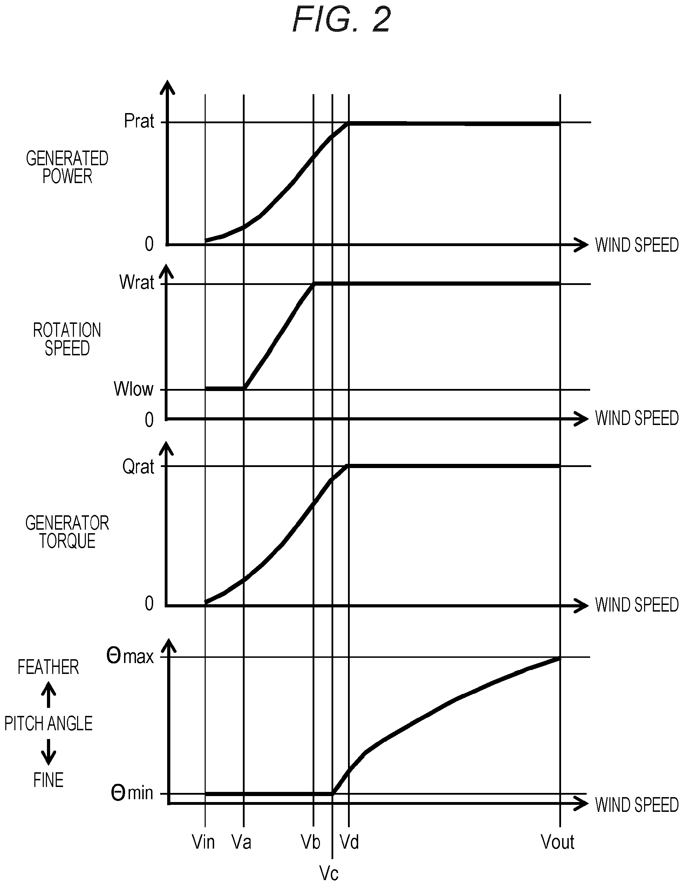

Figure 2 shows an outline of power generation operation of the wind power generator 1. Fig. 2 shows relationships of the generated power, the rotation speed of the generator, the generator torque, and the pitch angle with respect to the wind speed, and the outline of the power generation operation of the wind power generator 1 will be described using this figure. The horizontal axis of each graph indicates the wind speed, and the wind speed increases toward the right side. The vertical axis of each graph shows that the values of the generated power, rotational speed, and generator torque increase toward the upper side. Regarding the pitch angle, the upper side is a feather (wind passing) side, and the lower side is a fine (wind receiving) side.

Power generation is performed in a range from a cut-in wind speed Vin, at which the rotation of the rotor 4 is started, to a cut-out wind speed Vout, at which the rotation is stopped. The generated power value increases as the wind speed V increases up to a wind speed Vd, and the generated power is constant at higher wind speed.

The operation control device 12 controls the generator torque such that the rotation speed is constant (Wlow) from the cut-in wind speed Vin to a wind speed Va, and performs control by calculating the generator torque from the rotation speed such that the generated power with respect to the wind speed is maximized in a range from the wind speed Va to a wind speed Vb, in which the rotation speed is equal to or less than a rated rotation speed Wrat. When the wind speed Vb is exceeded and the rotation speed reaches the rated rotation speed Wrat, the generator torque and pitch angle are controlled so as to maintain the rated rotation speed Wrat. Basically, the control of the generator torque is performed in order to obtain a sufficient generated power. In the control of the generator torque, the generator torque is changed to a rated generator torque Qrat according to the wind speed in a range from the wind speed Vb to a wind speed Vd, and the rated generator torque Qrat is maintained in a range from the wind speed Vd to the cut-out wind speed Vout, during which the generated power is a rated generated power Prat.

In the control of the pitch angle, the pitch angle is maintained at Θmin on the fine side up to a wind speed Vc, and the pitch angle is changed according to the wind speed from Θmin on the fine side to Θmax on the feather side in a range from the wind speed Vc to the cutout Vout. Although the control of the generator torque and the control of the pitch angle are overlapped in a range from the wind speed Vc to the wind speed Vd in the example of Fig. 2, the overlap may be eliminated such that Vc = Vd and the control of the generator torque and the control of the pitch angle may be performed independently.

In the low-load operation mode, for example, the load reduction is achieved by limiting the rotation speed and the generated power to values smaller than the rated rotation speed Wrat and the rated generated power Prat and setting the fine-side pitch angle limit value to a value higher than Θmin to relieve the wind force applied to the wind power generator 1 as compared to the operation in the normal operation mode.

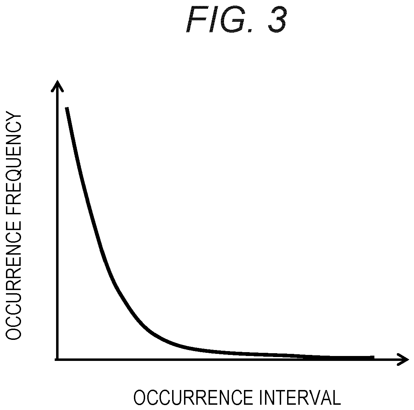

Fig. 3 shows an example of the relationship between the interval and frequency of occurrence of transitions at a place where transitions to the low-load operation mode frequently occur. The horizontal axis of Fig. 3 indicates the interval of occurrence of transitions to the low-load operation mode, and the vertical axis indicates the frequency of occurrence thereof. Although the situation differs depending on the installation location of the wind power generator 1 and seasonal variations, at a place where transitions to the low-load operation mode frequently occur in particular, the occurrence frequency is higher as the occurrence interval is narrower as shown in Fig. 3, and it is highly possible that transitions to the low-load operation mode continuously occur in a short time. By lowering the transition threshold only during such a period of time in which transitions to the low-load operation mode occur continuously, it is possible to obtain a sufficient amount of power generation while reliably reducing the load.

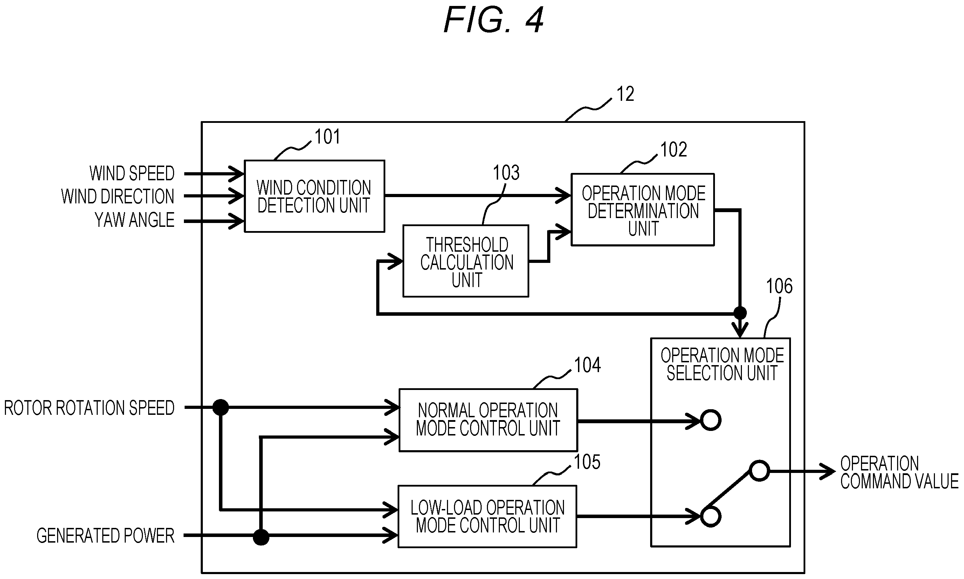

Fig. 4 is a block diagram showing an outline of an example of the operation control device 12 of the wind power generator 1 in the first embodiment of the present invention. The operation control device 12 of the first embodiment includes a wind condition detection unit 101, an operation mode determination unit 102, a threshold calculation unit 103, a normal operation mode control unit 104, a low-load operation mode control unit 105, and an operation mode selection unit 106.

Based on an input wind speed, wind direction, and yaw angle, the wind condition detection unit 101 detects and outputs wind condition data used for switching the operation mode . Note that the wind direction is an angle formed by the direction in which the wind blows and a predetermined reference direction, and the yaw angle is an angle formed by the direction of the rotor (rotation shaft) and a predetermined reference direction. Regarding the "predetermined reference direction", the north is set to 0° and defined as the reference direction, for example.

Note that any direction may be set as the reference direction without limitation to the north. The yaw error is the difference between the wind direction and the yaw angle. The operation mode determination unit 102 compares the wind condition data input from the wind condition detection unit 101 to a threshold input from the threshold calculation unit 103, and outputs an operation mode selection signal for selecting the low-load operation mode if the wind condition data exceeds the threshold or selecting the normal operation mode in other cases. The threshold calculation unit 103 normally outputs a preset threshold, and outputs a value obtained by reducing the set threshold as the threshold only during a predetermined period of time Tr after the operation mode selection signal input from the operation mode determination unit 102 changes from the normal operation mode to the low-load operation mode.

The normal operation mode control unit 104 calculates, from the input rotor rotation speed and generated power, a pitch angle command value of the blades 3 and a torque command value of the generator 6 for the normal operation mode without particular limitation, and outputs them as operation command values. The low-load operation mode control unit 105 calculates, from the input rotor rotation speed and generated power, a pitch angle command value of the blades 3 and a torque command value of the generator 6 for the low-load operation mode with a limited rotation speed and generated power, and outputs them as operation command values. Based on the operation mode selection signal from the operation mode determination unit 102, the operation mode selection unit 106 switches between the operation command values from the normal operation mode control unit 104 and the operation command values from the low-load operation mode control unit 105, and outputs them as final operation command values.

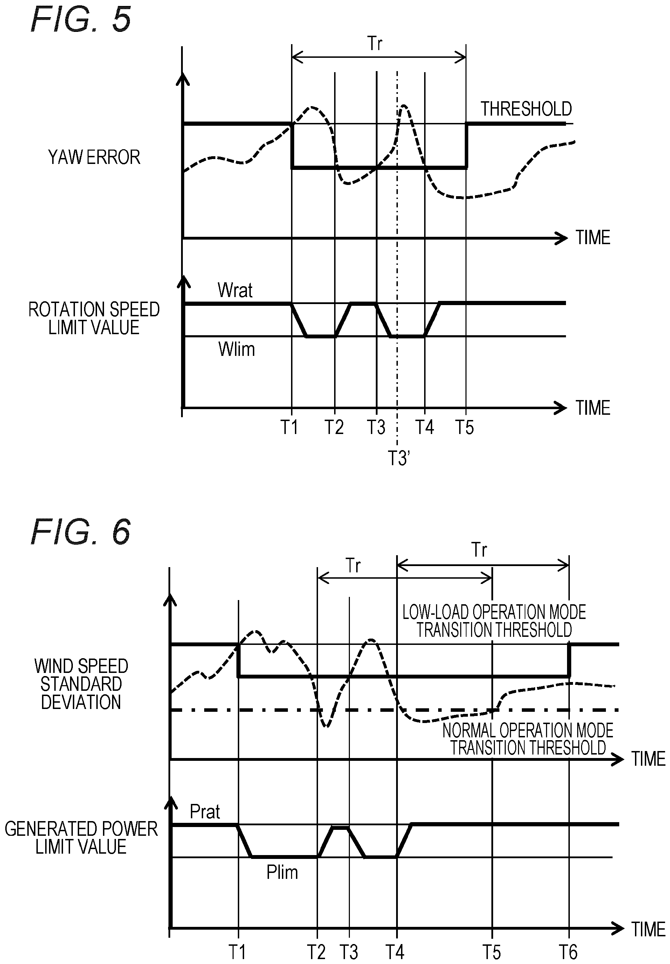

Fig. 5 shows an example of an operation mode switching operation in the operation control device 12 in the first embodiment. The horizontal axis of Fig. 5 indicates time, and the vertical axis indicates the yaw error, a yaw error threshold, and a rotation speed limit value from the upper part of the figure. In this embodiment, the yaw error value is used as the wind condition data for switching the operation mode, and the rotation speed is reduced in the low-load operation mode. The threshold of transitioning from the low-load operation mode to the normal operation mode is the same as the threshold of transitioning from the normal operation mode to the low-load operation mode. Although the "yaw error" is not a wind condition in a strict sense (narrow sense), it is also a wind direction when the reference direction is the direction of the rotor (rotation shaft), and the "yaw error" is regarded as a wind condition in a broad sense in this specification.

From a time T1 when the yaw error indicated by the broken line exceeds the threshold to a time T5 after the predetermined period of time Tr, the transition threshold is a reduced threshold. As shown by the thick solid line, the yaw error becomes equal to or less than the reduced threshold at times T2 and T4, and the yaw error exceeds the reduced threshold at a time T3. The limit value of the rotation speed changes from the rated rotation speed Wrat to a reduced rotation speed Wlim at the times T1 and T3 (low-load operation mode), and returns to the rated rotation speed Wrat at the times T2 and T4 (normal operation mode). However, it takes a certain period of time to transition from the rated rotation speed Wrat to the reduced rotation speed Wlim. For that reason, the change in the rotation speed lags behind the increase in the yaw error immediately after the time T1, but at the time T3, which occurs at the reduced threshold, the rotation speed is reduced before the yaw error increases. If the threshold is not reduced, the transition to the reduced rotation speed Wlim starts after a time T3', and therefore the change in the rotation speed lags behind the increase in the yaw error as in the case immediately after the time T1. Although Fig. 5 shows a case where the yaw error exceeds the normal threshold once in the predetermined period of time Tr for simplicity of description, the effect of load reduction is extremely significant when the yaw error increases a number of times in the predetermined period of time Tr. Note that the predetermined period of time Tr is determined by measuring the wind conditions in advance at the installation location of the wind power generator and considering an occurrence interval at which the occurrence frequency shown in Fig. 3 is sufficiently small. The predetermined period of time Tr may be revised by accumulating wind conditions from the start of use of the wind power generator and considering the accumulated wind conditions.

Thus, by lowering the threshold of transitioning from the normal operation mode to the low-load operation mode for a predetermined period of time once a transition to the low-load operation mode occurs, it is possible to make an early transition from the normal operation mode to the low-load operation mode when wind conditions in which the load increases continue (at the time T3 in Fig. 5) and reliably achieve the load reduction. In addition, by returning to the normal threshold when the wind conditions change and the load ceases to increase, it is possible to obtain a sufficient amount of power generation. Further, according to this embodiment, the threshold of transitioning from the normal operation mode to the low-load operation mode in wind conditions where the possibility of the operation in the low-load operation mode is not high can be set to a high value, and this can better prevent the decrease in the amount of power generation.

It is difficult to sufficiently narrow down periods of time during which the low-load operation mode is likely to occur based on the wind direction and wind speed, and the response may be delayed if statistical values such as the wind direction and wind speed turbulence intensity are used. However, in this embodiment, once a transition to the low-load operation mode occurs, the threshold of transitioning from the normal operation mode to the low-load operation mode is lowered for a predetermined period of time, and therefore it is possible to easily operate the wind power generator in consideration of the periods of time during which the low-load operation mode is likely to occur.

### Second Embodiment

A wind power generator according to a second embodiment will be described with reference to Fig. 6. Note that overlaps with the first embodiment will not be described in detail.

In this embodiment, the threshold calculation unit 103 normally outputs a preset threshold (threshold of transitioning from the normal operation mode to the low-load operation mode), and during a period of time in which the operation mode selection signal input from the operation mode determination unit 102 is of the low-load operation mode and during the predetermined period of time Tr after changing from the low-load operation mode to the normal operation mode, outputs a value obtained by reducing the set threshold as the threshold of transitioning from the normal operation mode to the low-load operation mode. In addition, when a change from the low-load operation mode to the normal operation mode occurs again during the predetermined period Tr, the threshold calculation unit 103 outputs the reduced transition threshold for the predetermined period of time Tr from that point of time.

Fig. 6 shows an example of an operation mode switching operation in the operation control device 12 in the second embodiment. The horizontal axis of Fig. 6 indicates time, and the vertical axis indicates a standard deviation of the wind speed, a threshold of the standard deviation of the wind speed, and a generated power limit value from the upper part of the figure. In this embodiment, the standard deviation of the wind speed is used as the wind condition data for switching the operation mode, and the generated power is reduced in the low-load operation mode. The threshold of transitioning from the low-load operation mode to the normal operation mode (normal operation mode transition threshold) is set to a value smaller than the threshold of transitioning from the normal operation mode to the low-load operation mode (low-load operation mode transition threshold) (a long dashed short dashed line in Fig. 6), so that frequent mode changes are prevented.

The low-load operation mode transition threshold indicated by the thick solid line is reduced from a time T1 when the standard deviation of the wind speed indicated by the broken line exceeds a normal threshold, and the reduced state is maintained from a time T2 when the standard deviation of the wind speed becomes equal to or less than the normal operation mode transition threshold indicated by the long dashed short dashed line to a time T5 after the predetermined period of time Tr. Furthermore, since a transition to the low-load operation mode occurs at a time T3 and a transition to the normal operation mode occurs again at a time T4 while the low-load operation mode transition threshold is reduced, the period of time in which the low-load operation mode transition threshold is reduced is extended by the predetermined period of time Tr from the time T4 and is maintained until a time T6. After the time T6, the low-load operation mode transition threshold returns to the normal threshold as before the time T1.

The power generation limit value changes from a rated generated power Prat to a reduced generated power Plim at the times T1 and T3, and returns to the rated generated power Prat at the times T2 and T4. As in the case of the rotation speed in the first embodiment, it takes a certain period of time to transition from the rated generated power Prat to the reduced generated power Plim. Therefore, in this embodiment as well, by lowering the threshold of transitioning to the low-load operation mode, it is possible to make an early transition to the low-load operation mode at the time T3, and achieve the load reduction during the period of time in which the wind conditions where the load increases continue. In addition, by extending the period of time in which the low-load operation mode transition threshold is reduced, the threshold during the period of time in which the wind conditions where the load increases continue can be continuously reduced, so that the load reduction effect can be improved. Further, by setting the threshold of transitioning from the low-load operation mode to the normal operation mode to a value smaller than the threshold of transitioning from the normal operation mode to the low-load operation mode, frequent changes of the operation mode can be prevented.

Note that, as in the first embodiment, the predetermined period of time Tr is determined by measuring the wind conditions in advance at the installation location of the wind power generator and considering an occurrence interval at which the occurrence frequency shown in Fig. 3 is sufficiently small. The predetermined period of time Tr may be revised by accumulating wind conditions from the start of use of the wind power generator and considering the accumulated wind conditions. Since the predetermined period of time Tr in the present embodiment is counted starting from the point of time of returning to the normal operation mode, the period of time in which the low-load operation mode transition threshold is reduced can be easily extended. In addition, it is not necessary to set the predetermined period of time Tr to be longer than necessary, and it is possible to reduce the low-load operation mode transition threshold according to the actual wind conditions.

### Third Embodiment

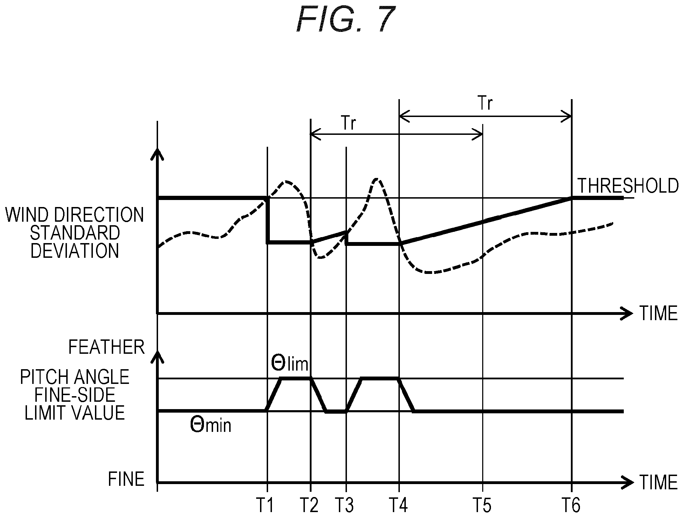

A wind power generator according to a third embodiment will be described with reference to Fig. 7. Note that overlaps with the first embodiment and the second embodiment will not described in detail.

In this embodiment, as in the second embodiment, the threshold calculation unit 103 normally outputs a preset threshold (threshold of transitioning from the normal operation mode to the low-load operation mode), and during a period of time in which the operation mode selection signal input from the operation mode determination unit 102 is of the low-load operation mode and during the predetermined period of time Tr after changing from the low-load operation mode to the normal operation mode, outputs a value obtained by reducing the set threshold as the threshold of transitioning from the normal operation mode to the low-load operation mode. In addition, when a change from the low-load operation mode to the normal operation mode occurs again during the predetermined period Tr, the threshold calculation unit 103 outputs the reduced transition threshold for the predetermined period of time Tr from that point of time. However, this embodiment is different from the second embodiment in that the low-load operation mode transition threshold changes in a ramp shape during the predetermined period of time Tr and finally becomes the normal low-load operation mode transition threshold.

Fig. 7 shows an example of an operation mode switching operation in the operation control device 12 in the third embodiment. The horizontal axis of Fig. 7 indicates time, and the vertical axis indicates a standard deviation of the wind direction, a threshold of the standard deviation of the wind direction, and a pitch angle fine-side limit value from the upper part of the figure. In this embodiment, the standard deviation of the wind direction is used as the wind condition data for switching the operation mode, and the pitch angle fine-side limit value is changed in the low-load operation mode. The threshold of transitioning from the low-load operation mode to the normal operation mode is the same as the threshold of transitioning from the normal operation mode to the low-load operation mode.

The threshold indicated by the thick solid line is reduced from a time T1 when the standard deviation of the wind direction indicated by the broken line exceeds a normal threshold, and the reduced state is maintained while changing in a ramp shape from a time T2 when the standard deviation of the wind direction becomes equal to or less than the transition threshold to a time T5 after the predetermined period of time Tr. Although the solid line of the transition threshold until the time T5 is not shown in Fig. 7 since a transition to the low-load operation mode occurs again during the predetermined period of time Tr as described later, the threshold changes in a ramp shape until the time T5 and returns to the normal threshold when no transition to the low-load operation mode occurs during the predetermined period of time Tr. While the transition threshold is reduced, a transition to the low-load operation mode occurs at a time T3 when the standard deviation of the wind direction exceeds the transition threshold changing in a ramp shape, and the transition threshold becomes the same as the reduced transition threshold of T1 (the ramp-shaped change of the transition threshold is reset). Furthermore, since a transition to the normal operation mode occurs again at a time T4 when the standard deviation of the wind direction becomes equal to or less than the transition threshold, during the period of time in which the low-load operation mode transition threshold is reduced, the predetermined period of time Tr is counted from the time T4 and the threshold returns to the normal threshold at a time T6 while changing in a ramp shape (the end of the reduction period is extended from T5 to T6).

The pitch angle fine-side limit value changes from Θmin to Θlim on the feather side at the times T1 and T3 to allow wind force to escape, and returns to Omin at the times T2 and T4. As in the case of the rotation speed in the first embodiment, it takes a certain period of time to transition from Omin to Θlim. Therefore, by lowering the threshold of transitioning to the low-load operation mode, it is possible to make an early transition to the low-load operation mode at the time T3, and achieve the load reduction during the period of time in which the wind conditions where the load increases continue. In addition, by gradually returning the reduced threshold to the normal threshold during the predetermined period of time Tr, the threshold can be transitioned smoothly and a sufficient amount of generated power can be obtained when the wind conditions change and the load ceases to increase.

Although the threshold is changed in a ramp shape in the above embodiment, this may be changed in a curved shape or a stepped shape. In addition, although the threshold is changed in a ramp shape so as to equal the normal threshold after the predetermined period of time Tr in the above embodiment, it is not necessary to make it equal to the normal threshold after the predetermined period of time Tr, and the threshold may be changed to the normal threshold in a stepped shape at a point of time after the predetermined period of time Tr.

Regarding the wind condition data and the low-load operation mode, those described in the above-described embodiment are examples and there is no limitation thereto . For example, as the wind condition data, an instantaneous value of the wind speed or wind direction may be used instead of the instantaneous value of the yaw error as in the first embodiment, and a statistical value such as an average value of the wind speed, wind direction, or yaw error may be used instead of the standard deviation of the wind speed and the standard deviation of the wind direction as in the second and third embodiments. Further, in the low-load operation mode, torque may be used as an index for control instead of the generated power, rotation speed, or pitch angle (fine side).

Furthermore, although the wind power generator is described by using a downwind-type wind power generator as an example in the above embodiment, application to an upwind-type wind power generator is also possible. In addition, there is no limitation to a wind power generator installed on the ground, and application to a floating or bottom-mounted offshore wind power generator is also possible.

The present invention is not limited to the above-described embodiments and encompasses various modifications.

For example, the above-described embodiments have been described in detail in order to explain the present invention in an easy-to-understand manner, and are not necessarily limited to those including all the configurations described. A part of the configuration of an embodiment can be replaced with the configuration of another embodiment, and the configuration of an embodiment can be added to the configuration of another embodiment. Further, addition, deletion, or replacement of another configuration can be made to a part of the configuration of each embodiment.

### Reference Signs List

- 1: wind power generator
- 2: hub
- 3: blade
- 4: rotor
- 5: nacelle
- 6: generator
- 7: wind direction and speed meter
- 8: rotation speed sensor
- 9: pitch angle adjustment device
- 10: tower
- 11: yaw angle adjustment device
- 12: operation control device

## Claims

1. A wind power generator (1) comprising a normal operation mode and a low-load operation mode in which a load acting on the wind power generator (1) is reduced relative to operation in the normal operation mode, and comprising an operation control device (12) that causes a transition from the normal operation mode to the low-load operation mode when wind condition data exceeds a low-load operation mode transition threshold that is a threshold of transitioning from the normal operation mode to the low-load operation mode,
**characterized in that**
when the wind condition data exceeds the low-load operation mode transition threshold and the operation control device (12) causes a transition from the normal operation mode to the low-load operation mode to occur, the operation control device (12) reduces a value of the low-load operation mode transition threshold and maintains the reduced state of the low-load operation mode transition threshold value for a predetermined period of time (Tr).

2. The wind power generator (1) according to claim 1, wherein
the operation control device (12) includes a normal operation mode transition threshold that is a threshold of transitioning from the low-load operation mode to the normal operation mode for the wind condition data, and causes a transition from the low-load operation mode to the normal operation mode when the wind condition data becomes equal to or less than the normal operation mode transition threshold, and
the operation control device (12) holds the value of the low-load operation mode transition threshold at the reduced state for the predetermined period of time (Tr) starting anew from a point of time when a return from the low-load operation mode to the normal operation mode occurs.

3. The wind power generator (1) according to claim 2, wherein, when the operation control device (12) causes a transition from the normal operation mode to the low-load operation mode during the predetermined period of time, the predetermined period of time starts from a point of time when a return from the low-load operation mode to the normal operation mode occurs again.

4. The wind power generator (1) according to claim 2, wherein the operation control device (12) reduces a degree of reduction of the low-load operation mode transition threshold during the predetermined period of time.

5. The wind power generator (1) according to claim 1, wherein
the operation control device (12) includes a normal operation mode transition threshold that is a threshold of transitioning from the low-load operation mode to the normal operation mode for the wind condition data,
the normal operation mode transition threshold is set to a value smaller than the low-load operation mode transition threshold in both the reduced and non-reduced state of the low-load operation mode transition threshold, and
a transition from the low-load operation mode to the normal operation mode occurs when the wind condition data becomes equal to or less than the normal operation mode transition threshold.

6. The wind power generator (1) according to claim 1, wherein
the operation control device (12) includes a normal operation mode transition threshold that is a threshold of transitioning from the low-load operation mode to the normal operation mode for the wind condition data,
the low-load operation mode transition threshold and the normal operation mode transition threshold are set equal to each other in both the reduced and non-reduced state of the low-load operation mode transition threshold, and
a transition from the low-load operation mode to the normal operation mode occurs when the wind condition data becomes equal to or less than the normal operation mode transition threshold.

7. The wind power generator (1) according to claim 1, wherein the wind condition data includes at least one of an instantaneous value or a statistical value of a wind speed, a wind direction or a yaw error.

8. The wind power generator (1) according to claim 1, wherein, in the low-load operation mode, the operation control device (12) controls a rotation speed of a hub (2) of the wind power generator (1) or an output of a generator (6) of the wind power generator (1) to be smaller than a rotation speed of the hub (2) of the wind power generator (1) or an output of the generator (6) of the wind power generator (1) in the normal operation mode.

9. The wind power generator (1) according to claim 1, wherein, in the low-load operation mode, the operation control device (12) controls a fine-side limit value of a pitch angle of a blade (3) of the wind power generator (1) to be on a feather side relative to a fine-side limit value of the pitch angle of the blade (3) of the wind power generator (1) in the normal operation mode.

## Patentansprüche

1. Windkraftgenerator (1) mit einem Normalbetriebsmodus und einem Niedriglastbetriebsmodus, in dem eine auf den Windenergiegenerator (1) wirkende Last gegenüber dem Betrieb im Normalbetriebsmodus verringert ist, und mit einer Betriebssteuervorrichtung (12), die einen Übergang vom Normalbetriebsmodus zum Niedriglastbetriebsmodus bewirkt, wenn Windzustandsdaten einen Niedriglastbetriebsmodus-Übergangsschwellenwert überschreiten, der ein Schwellenwert für den Übergang vom Normalbetriebsmodus zum Niedriglastbetriebsmodus ist,
**dadurch gekennzeichnet, dass**
wenn die Windzustandsdaten den Niederlastbetriebsmodus-Übergangsschwellenwert überschreiten und die Betriebssteuervorrichtung (12) den Vorgang eines Übergangs vom Normalbetriebsmodus in den Niederlastbetriebsmodus bewirkt, die Betriebssteuervorrichtung (12) einen Wert des Niedriglastbetriebsmodus-Übergangsschwellenwerts verringert und den verringerten Zustand des Niedriglastbetriebsmodus-Übergangsschwellenwerts für eine vorbestimmte Zeitdauer (Tr) beibehält.

2. Windenergiegenerator (1) nach Anspruch 1, wobei
die Betriebssteuervorrichtung (12) einen Normalbetriebsmodus-Übergangsschwellenwert, der ein Schwellenwert für den Übergang vom Niedriglastbetriebsmodus zum Normalbetriebsmodus ist, für die Windbedingungen enthält und einen Übergang vom Niederlastbetriebsmodus zum Normalbetriebsmodus bewirkt, wenn die Windzustandsdaten kleiner oder gleich dem Normalbetriebsmodus-Übergangsschwellenwert werden, und
die Betriebssteuervorrichtung (12) den Wert des Normalbetriebsmodus-Übergangsschwellenwerts im verringerten Zustand für die vorbestimmte Zeitdauer, die an einem Zeitpunkt neu beginnt, zu dem eine Rückkehr vom Niedriglast-Betriebsmodus zum Normalbetriebsmodus eintritt, hält.

3. Windkraftgenerator (1) nach Anspruch 2, wobei, wenn die Betriebssteuervorrichtung (12) während der vorbestimmten Zeitdauer einen Übergang vom Normalbetriebsmodus in den Niedriglastbetriebsmodus bewirkt, die vorbestimmte Zeitdauer an einem Zeitpunkt beginnt, zu dem wieder eine Rückkehr vom Niedriglastbetriebsmodus in den Normalbetriebsmodus erfolgt.

4. Windkraftgenerator (1) nach Anspruch 2, wobei die Betriebssteuervorrichtung (12) einen Grad der Verringerung des Niedriglastbetriebsmodus-Übergangsschwellenwerts während der vorbestimmten Zeitdauer verringert.

5. Windenergiegenerator (1) nach Anspruch 1, wobei
die Betriebssteuervorrichtung (12) einen Normalbetriebsmodus-Übergangsschwellenwert, der ein Schwellenwert für den Übergang vom Niedriglastbetriebsmodus zum Normalbetriebsmodus ist, für die Windbedingungen enthält,
der Normalbetriebsmodus-Übergangsschwellenwert auf einen Wert eingestellt wird, der kleiner als der Niedriglastbetriebsmodus-Übergangsschwellenwert sowohl im verringerten Zustand als auch im nicht-verringerten Zustand des Niedriglastbetriebsmodus-Übergangsschwellenwerts ist, und
ein Übergang vom Niedriglastbetriebsmodus zum Normalbetriebsmodus eintritt, wenn die Windzustandsdaten kleiner oder gleich dem Normalbetriebsmodus-Übergangsschwellenwert werden.

6. Windenergiegenerator (1) nach Anspruch 1, wobei
die Betriebssteuervorrichtung (12) einen Normalbetriebsmodus-Übergangsschwellenwert, der ein Schwellenwert für den Übergang vom Niedriglastbetriebsmodus zum Normalbetriebsmodus ist, für die Windbedingungen enthält,
der Niedriglastbetriebsmodus-Übergangsschwellenwert und der Normalbetriebsmodus-Übergangsschwellenwert sowohl im verringerten Zustand als auch im nicht-verringerten Zustand des Niedriglastbetriebsmodus-Übergangsschwellenwerts gleich zueinander eingestellt werden, und
ein Übergang vom Niedriglastbetriebsmodus zum Normalbetriebsmodus eintritt, wenn die Windzustandsdaten kleiner oder gleich dem Normalbetriebsmodus-Übergangsschwellenwert werden.

7. Windkraftgenerator (1) nach Anspruch 1, wobei die Windzustandsdaten zumindest einen Momentanwert und/oder einen statistischen Wert einer Windgeschwindigkeit, einer Windrichtung oder eines Gierfehlers umfassen.

8. Windenergiegenerator (1) nach Anspruch 1, wobei die Betriebssteuervorrichtung (12) im Niedriglastbetriebsmodus eine Drehzahl einer Nabe (2) des Windenergiegenerators (1) oder eine Ausgabe eines Generators (6) des Windkraftgenerators (1) dahingehend steuert, dass sie kleiner als eine Drehzahl der Nabe (2) des Windkraftgenerators (1) oder eine Ausgabe des Generators (6) des Windkraftgenerators (1) im Normalbetriebsmodus ist.

9. Windenergiegenerator (1) nach Anspruch 1, wobei die Betriebssteuervorrichtung (12) im Niedriglastbetriebsmodus einen feinseitigen Grenzwert eines Anstellwinkels eines Blatts (3) des Windkraftgenerators (1) dahingehend steuert, dass er auf einer Fahnenseite relativ zu einem feinseitigen Grenzwert des Anstellwinkels des Blattes (3) des Windkraftgenerators (1) im Normalbetriebsmodus ist.

## Revendications

1. Générateur (1) d'énergie éolienne comprenant un mode de fonctionnement normal et un mode de fonctionnement à faible charge dans lequel une charge agissant sur le générateur (1) d'énergie éolienne est réduite par rapport à un fonctionnement dans le mode de fonctionnement normal, et comprenant un dispositif (12) de commande de fonctionnement qui amène une transition du mode de fonctionnement normal au mode de fonctionnement à faible charge lorsque des données de conditions de vent excèdent un seuil de transition de mode de fonctionnement à faible charge qui est un seuil de transition du mode de fonctionnement normal au mode de fonctionnement à faible charge,
**caractérisé en ce que**
lorsque les données de conditions de vent excèdent le seuil de transition de mode de fonctionnement à faible charge et que le dispositif (12) de commande de fonctionnement amène une transition du mode de fonctionnement normal au mode de fonctionnement à faible charge à survenir, le dispositif (12) de commande de fonctionnement réduit une valeur du seuil de transition de mode de fonctionnement à faible charge et maintient l'état réduit de la valeur de seuil de transition de mode de fonctionnement à faible charge pour une période de temps prédéterminée (Tr).

2. Générateur (1) d'énergie éolienne selon la revendication 1, dans lequel
le dispositif (12) de commande de fonctionnement inclut un seuil de transition de mode de fonctionnement normal qui est un seuil de transition du mode de fonctionnement à faible charge au mode de fonctionnement normal pour les données de conditions de vent, et amène une transition du mode de fonctionnement à faible charge au mode de fonctionnement normal lorsque les données de conditions de vent deviennent égales ou inférieures au seuil de transition de mode de fonctionnement normal, et
le dispositif (12) de commande de fonctionnement maintient la valeur du seuil de transition de mode de fonctionnement à faible charge à l'état réduit pour la période de temps prédéterminée (Tr) en démarrant de nouveau depuis un point dans le temps où un retour du mode de fonctionnement à faible charge au mode de fonctionnement normal survient.

3. Générateur (1) d'énergie éolienne selon la revendication 2, dans lequel, lorsque le dispositif (12) de commande de fonctionnement amène une transition du mode de fonctionnement normal au mode de fonctionnement à faible charge lors de la période de temps prédéterminée, la période de temps prédéterminée démarre depuis un point dans le temps où un retour du mode de fonctionnement à faible charge au mode de fonctionnement normal survient à nouveau.

4. Générateur (1) d'énergie éolienne selon la revendication 2, dans lequel le dispositif (12) de commande de fonctionnement réduit un degré de réduction du seuil de transition de mode de fonctionnement à faible charge lors de la période de temps prédéterminée.

5. Générateur (1) d'énergie éolienne selon la revendication 1, dans lequel
le dispositif (12) de commande de fonctionnement inclut un seuil de transition de mode de fonctionnement normal qui est un seuil de transition du mode de fonctionnement à faible charge au mode de fonctionnement normal pour les données de conditions de vent,
le seuil de transition de mode de fonctionnement normal est fixé à une valeur plus petite que le seuil de transition de mode de fonctionnement à faible charge à la fois dans l'état réduit et non réduit du seuil de transition de mode de fonctionnement à faible charge, et
une transition du mode de fonctionnement à faible charge au mode de fonctionnement normal survient lorsque les données de conditions de vent deviennent égales ou inférieures au seuil de transition de mode de fonctionnement normal.

6. Générateur (1) d'énergie éolienne selon la revendication 1, dans lequel
le dispositif (12) de commande de fonctionnement inclut un seuil de transition de mode de fonctionnement normal qui est un seuil de transition du mode de fonctionnement à faible charge au mode de fonctionnement normal pour les données de conditions de vent,
le seuil de transition de mode de fonctionnement à faible charge et le seuil de transition de mode de fonctionnement normal sont fixés égaux l'un à l'autre à la fois dans l'état réduit et non réduit du seuil de transition de mode de fonctionnement à faible charge, et
une transition du mode de fonctionnement à faible charge au mode de fonctionnement normal survient lorsque les données de conditions de vent deviennent égales ou inférieures au seuil de transition de mode de fonctionnement normal.

7. Générateur (1) d'énergie éolienne selon la revendication 1, dans lequel les données de conditions de vent incluent au moins une parmi une valeur instantanée ou une valeur statistique d'une vitesse de vent, d'une direction de vent ou d'une erreur de lacet.

8. Générateur (1) d'énergie éolienne selon la revendication 1, dans lequel, dans le mode de fonctionnement à faible charge, le dispositif (12) de commande de fonctionnement commande une vitesse de rotation d'un moyeu (2) du générateur (1) d'énergie éolienne ou une sortie d'un générateur (6) du générateur (1) d'énergie éolienne pour qu'elles soient plus petites qu'une vitesse de rotation du moyeu (2) du générateur (1) d'énergie éolienne ou qu'une sortie du générateur (6) du générateur (1) d'énergie éolienne dans le mode de fonctionnement normal.

9. Générateur (1) d'énergie éolienne selon la revendication 1, dans lequel, dans le mode de fonctionnement à faible charge, le dispositif (12) de commande de fonctionnement commande une valeur limite de côté fin d'un angle de calage d'une pale (3) du générateur (1) d'énergie éolienne pour être sur un côté mise en drapeau par rapport à une valeur limite de côté fin de l'angle de calage de la pale (3) du générateur (1) d'énergie éolienne dans le mode de fonctionnement normal.
